# FASCICULE DE BREVET EUROPEEN

(11) **EP 0 615 879 B1**
(45) Date de publication et mention de la délivrance du brevet: **29.01.1997**
(21) Numéro de dépôt: 94400600.6
(22) Date de dépôt: 18.03.1994
(51) Int. Cl.: B60N 2/00, B60N 2/06, B60N 2/08

(54) **Dispositif de réglage de position de siège pour véhicule automobile**
Lageeinstellungsvorrichtung für Kraftfahrzeugsitze
Position adjusting device for motor vehicle seats

(30) Priorité: 19.03.1993 FR 9303210
(43) Date de publication de la demande: 21.09.1994
(73) Titulaire: MATRA AUTOMOBILE, F-75116 Paris (FR)
(72) Inventeur: Faligand, Jacky, F-78120 Rambouillet (FR); Escarguel, Hugues, F-91300 Massy (FR); de Ruyck, Pascal, F-78370 Plaisir (FR)
(74) Mandataire: Loisel, Bertrand

(56) Documents cités:
- EP-A- 0 476 977
- EP-A- 0 490 313
- GB-A- 571 805
- GB-A- 754 290
- GB-A- 2 110 080
- US-A- 4 949 931
- PATENT ABSTRACTS OF JAPAN vol. 11, no. 39 (M-559) (2486) 5 Février 1987 & JP-A-61 205 522 (MINORU KITSUTA)

## Description

L'invention concerne les dispositifs de réglage de la position longitudinale d'un siège dans un véhicule automobile et elle trouve une application particulièrement importante, bien que non-exclusive, dans les véhicules équipés de sièges enlevables, pouvant être disposés à différents emplacements sur le plancher.

On connaît déjà des dispositifs de réglage ayant au moins deux rails parallèles fixés au plancher et deux coulisseaux solidaires du siège, pouvant coulisser sur les rails fixes et munis de moyens, désarmables à l'aide d'une commande manuelle portée par le bâti du siège, de verrouillage des coulisseaux dans l'une quelconque de plusieurs positions longitudinales.

Les dispositifs connus présentent un certain nombre d'inconvénients et de limitations. En particulier, beaucoup ont tendance à présenter des défauts de fonctionnement au-delà d'une certaine durée d'utilisation. Par exemple, le document US-A-4 949 931 (correspondant au préambule de la revendication indépendante 1) décrit un dispositif de réglage qui fait intervenir de nombreuses pièces, et qui, de ce fait, est complexe, coûteux et peu fiable. En outre, l'encombrement en hauteur de ce dispositif est peu adapté à un véhicule de type monospace où on souhaite, lorsque le siège est enlevé, que les parties restantes du dispositif de réglage ne dépassent pas de façon gênante sur le revêtement du plancher.

Le document GB-A-571 805 décrit un siège de véhicule dont la base comporte un cadre tubulaire pourvu d'orifices longitudinalement espacés et disposés de façon que l'un de ces orifices reçoive une goupille de verrouillage poussée par un ressort. En tirant la goupille à l'encontre du ressort, l'utilisateur libère le siège qui peut alors coulisser jusqu'à une position désirée. La goupille est ensuite remise en place pour verrouiller le siège dans la nouvelle position.

L'invention vise notamment à fournir un dispositif de réglage du type ci-dessus défini de constitution compacte, simple et robuste, et de plus aisément réalisable de façon telle que le siège puisse être fixé aux coulisseaux et enlevé sans difficulté.

L'invention propose ainsi un dispositif tel que défini dans la revendication 1.

Lorsque le pêne est agencé pour coulisser verticalement relativement au coulisseau, en étant sollicité vers le bas par les moyens de rappel, l'organe déplaçable le long du coulisseau peut notamment être constitué par une platine présentant au moins une face inclinée de soulèvement du pêne lorsqu'elle est déplacée à partir de la position de repos.

Les logements peuvent encore être situés sur un côté du rail, le pêne pouvant coulisser latéralement par rapport au coulisseau. L'organe intégré au coulisseau est alors constitué par une platine qui présente un orifice dont le pourtour comprend au moins une surface d'appui sur une tige verticale d'accouplement du pêne, cette surface d'appui formant un angle avec la direction du coulisseau et avec la direction de coulissement du pêne, pour éloigner le pêne des logements lorsque la platine est déplacée à partir de la position de repos.

Le bâti du siège porte une tringlerie de commande permettant de déplacer la platine. Dans un mode avantageux de réalisation, chaque coulisseau porte à ses extrémités des anneaux ou des doigts d'appui des pieds avant et arrière d'un siège et d'accrochage de verrous désarmables montés sur les pieds. Pour que la position longitudinale du siège puisse être réglée lorsque le siège est placé sur le coulisseau dans l'une ou l'autre de deux positions à 180° l'une de l'autre, la platine prend appui sur le pêne par l'une ou l'autre de deux surfaces d'appui formant chacune un angle avec la direction du coulisseau et avec la direction de déplacement du pêne relativement au coulisseau, ces deux surfaces d'appui étant symétriques l'une de l'autre par rapport à la direction de déplacement du pêne.

Dans une constitution simple des moyens de commande, lorsque les pieds avant comportent un verrou principal et un verrou secondaire, les moyens déplaçables le long du coulisseau peuvent être prévus pour être poussés à partir d'une position de repos par l'appui du verrou secondaire, commandé par une manette ou un palonnier placé sous le bâti du siège, à l'avant de ce dernier.

Pour donner au coulisseau de bonnes caractéristiques de coulissement avec un encombrement vertical du dispositif réduit, des bâtonnets cylindriques en matériau à faible coefficient de frottement peuvent être emprisonnés entre le coulisseau et le rail : cette solution, comparée à l'utilisation de billes circulant le long d'un chemin fermé, présente l'avantage notamment d'une réduction importante de l'encombrement vertical, du fait de l'absence d'un trajet de retour.

L'invention a également pour objet un siège enlevable tel que défini dans la revendication 17.

D'autres caractéristiques de l'invention, utilisables avantageusement en liaison avec les précédentes, mais pouvant l'être indépendamment, apparaîtront mieux à la lecture de la description qui suit d'un mode particulier de réalisation, donné à titre non-limitatif. La description se réfère aux dessins qui l'accompagnent, dans lesquels :
- la figure 1 est un schéma de principe en perspective, montrant les éléments concernés par l'invention d'un dispositif de réglage de la position longitudinale d'un siège de véhicule ;
- la figure 2 est une vue en élévation d'un des ensembles rail-coulisseau d'un dispositif selon un mode particulier de réalisation ;
- les figures 3 et 4 sont respectivement une vue de dessus et une vue en coupe transversale du dispositif de la figure 2 ;
- la figure 5 montre schématiquement, en élévation et à grande échelle, une constitution possible des moyens manuels de commande d'un dispositif du genre montré en figures 2 à 4 ;
- la figure 6 est une vue de-dessus schématique, montrant une répartition possible de rails de réglage fixés au plancher d'un véhicule automobile ;
- la figure 7 est une vue en perspective éclatée d'un ensemble rail-coulisseaux d'un second mode de réalisation de l'invention ;
- les figures 8 et 9 représentent deux sections transversales du dispositif de réglage de la figure 7 ; et
- la figure 10 est une vue en plan d'un ressort faisant partie du dispositif des figures 7 à 9.

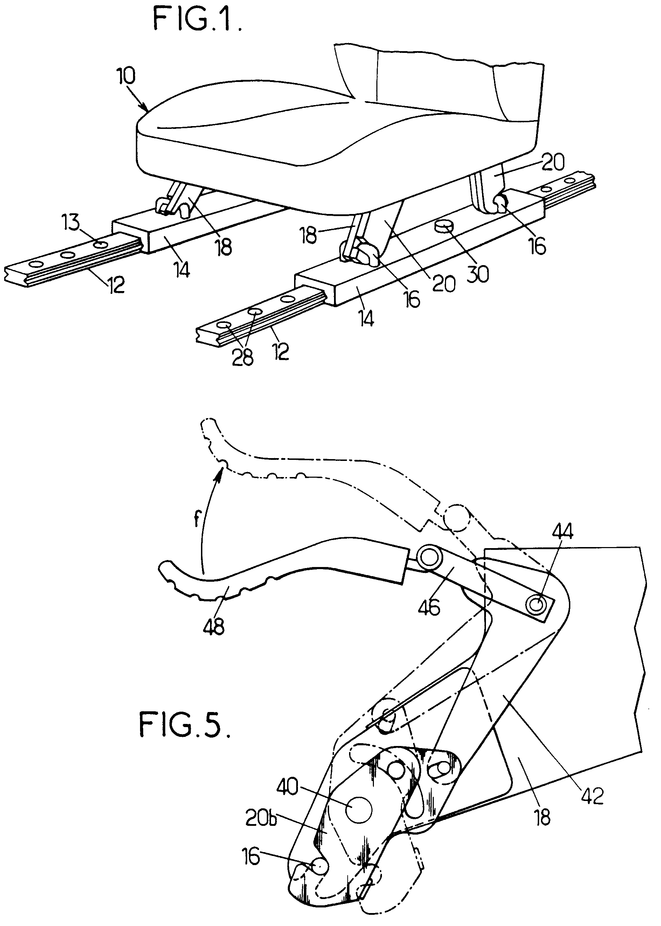

Le dispositif dont la figure 1 montre les constituants principaux est destiné à porter l'assise d'un siège 10 et à permettre de régler la position longitudinale du siège sur deux rails 12 fixés au plancher d'un véhicule, par exemple à l'aide de vis réparties le long des rails à des emplacements 13. Le dispositif comporte deux coulisseaux 14 déplaçables le long des rails et munis chacun de deux anneaux d'accrochage 16 dont l'écartement correspond à celui des pieds 18 du siège. Ces pieds présentent, dans le mode de réalisation représenté, une échancrure inférieure d'engagement des anneaux. Un tel siège est en conséquence enlevable. Pour le retenir en place lors de son utilisation, chaque pied 18 est muni d'un verrou 20 effaçable par un organe de commande manuel, non représenté sur la figure 1.

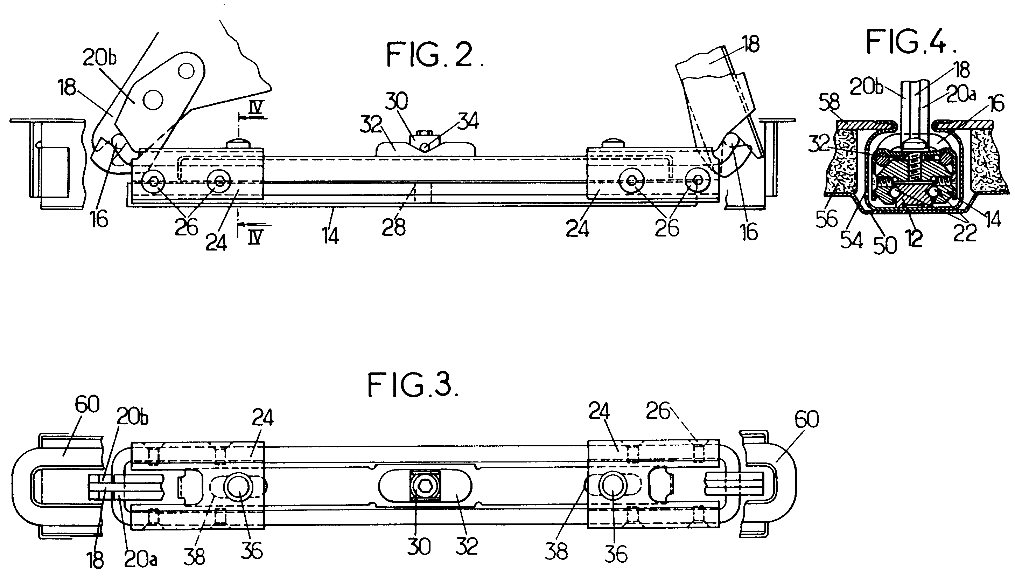

Les figures 2 à 4 montrent un premier mode de réalisation d'un rail 12, d'un coulisseau 14 et des éléments qui leur sont associés.

Le coulisseau 14 comporte un corps destiné à se déplacer le long du rail et à être retenu contre l'arrachement. Pour cela, il coopère avec le rail par des moyens qui peuvent avoir une constitution classique. Il est cependant plus avantageux d'adopter la constitution montrée en figure 4 : dans les flancs latéraux du rail 12 sont ménagées deux rainures en V s'étendant le long du rail. Le corps du coulisseau 14 présente une section en U renversé avec deux branches qui encadrent le rail 12 et présentent deux rainures internes qui font face aux rainures du rail. Les jeux de rainures ainsi constitués emprisonnent des bâtonnets 22 en matière plastique à faible coefficient de frottement, au nombre de quatre par exemple. Ainsi le coulisseau s'appuie sur le rail par l'intermédiaire de bâtonnets de faible encombrement vertical qui, de plus, assurent un fonctionnement silencieux.

Les anneaux 16 sont retenus sur le corps du coulisseau par des renforts 24. Les anneaux et les renforts seront généralement en acier et fixés l'un à l'autre par soudage. Les renforts sont par exemple fixés au corps du coulisseau, qui peut être en alliage léger, par des vis 26.

Les moyens de verrouillage destinés à retenir le siège longitudinalement comportent des logements 28 répartis le long de la base du rail. Ils comprennent par ailleurs un pêne porté par le coulisseau qui, dans le mode de réalisation illustré sur les figures 1 à 4, est constitué par un doigt de verrouillage 30. Le doigt 30 peut coulisser verticalement dans un trou du coulisseau entre la position basse où elle est représentée sur la figure 1 et où elle s'engage dans un trou du rail et une position haute où elle en est dégagée. Un ressort (non représenté) est prévu pour solliciter le doigt 30 vers sa position basse. La partie inférieure du doigt 30 peut avoir une forme s'évasant légèrement vers le bas, de sorte qu'une pression longitudinale exercée sur la partie inférieure du doigt tende à l'enfoncer davantage plutôt qu'à le chasser vers le haut.

Un organe déplaçable le long du coulisseau 14, constitué dans le mode de réalisation représenté sur les figures 1 à 4 par une platine 32, permet de soulever à volonté le doigt 30 dans une position où il laisse le coulisseau libre de se déplacer le long du rail.

Dans le cas particulier montré sur les figures 2 à 4, la platine soulève le doigt 30 lorsqu'elle est déplacée dans un sens ou dans l'autre à partir de la position de repos où elle est représentée. Pour cela elle comporte deux faces d'appui inclinées symétriques l'une de l'autre par rapport à la direction verticale de coulissement du doigt 30, formant un V s'ouvrant vers le haut, destinées à recevoir une tige 34 fixée au doigt de verrouillage 30, transversalement à ce dernier. Les moyens élastiques de rappel qui seront généralement prévus sur le doigt 30 permettent également de maintenir la platine dans sa position de repos.

La platine est maintenue plaquée contre le coulisseau par des moyens qui limitent également ses déplacements longitudinaux. Dans la réalisation montrée en figures 2 et 3, ces moyens comprennent les renforts 24, sous lesquels passe la platine, et les vis 26 qui traversent les renforts et s'engagent dans des trous oblongs 38 de la platine.

La longueur des trous 38 est suffisante pour que la platine puisse se déplacer jusqu'à soulever le doigt 30 hors du logement 28.

La platine est prévue de façon à pouvoir être déplacée à partir d'un palonnier porté par les sièges, sans pour cela déverrouiller les pieds avant et/ou arrière. Pour cela, les pieds avant du siège sont avantageusement munis de deux verrous, et non pas d'un seul comme dans le cas montré en figure 1. En particulier, chaque pied avant peut être muni d'un verrou primaire 20ₐ et d'un verrou secondaire 20_{b}, pouvant être simultanément actionnés dans un sens provoquant le déverrouillage par des moyens souples, par exemple du genre décrit dans la demande de brevet français FR-A-2 700 735 (enregistrement national n° 93 00792). Mais seul le verrou secondaire 20_{b} est prévu pour être commandé par le palonnier. De plus il est prévu pour venir s'appuyer contre la platine et l'écarter de sa position de repos lorsqu'il est actionné.

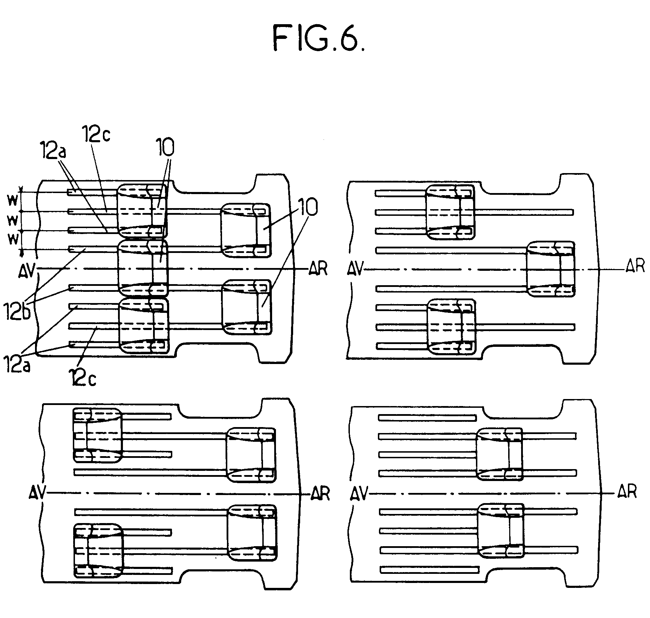

La figure 5 montre un tel verrou 20_{b} tournant sur le pied autour d'un axe 40 qui est le même que celui du verrou primaire. Le verrou 20_{b} est attelé à un guignol ou levier coudé 42 tournant également sur le pied avant autour d'un axe 44 et solidaire d'un palonnier 46 muni d'une manette 48. En tirant sur la manette 48, située sous le siège, dans le sens indiqué par la flèche f on amène le guignol et le verrou secondaire dans la position représentée en traits mixtes sur la figure 5. La partie basse du verrou, lorsqu'elle recule, vient en butée contre la platine, et la pousse pour soulever la tige 34.

On voit que le mode de réglage longitudinal du siège s'effectue de façon classique : l'utilisateur lève le palonnier pour dégager les doigts de verrouillage. On peut alors avancer ou reculer l'ensemble siège-coulisseau, les verrous primaires 20ₐ restant engagés et garantissant la sécurité de l'utilisateur. Une fois la position recherchée atteinte, l'utilisateur relâche le palonnier et amène le siège jusqu'à un emplacement où le doigt 30 s'engage dans un logement 28.

Pour éviter la présence de saillies sur le plancher du véhicule, l'ensemble constitué par un rail et le coulisseau correspondant peut être placé de la façon indiquée sur la figure 4. Le rail est monté par des vis sur le fond en tôle 50 appartenant à la carrosserie, éventuellement muni de renforts locaux. Un cache 54 délimite un espace autour du rail, dans l'épaisseur de la couche d'isolement 56. Il retient cette couche et les bords d'une moquette de finition 58. Du fait de sa faible hauteur, l'ensemble peut être complètement logé dans l'épaisseur de la couche d'isolement.

La partie terminale des rails peut être munie de caches de fermeture 60 (figure 3).

Pour laisser une grande latitude de mise en place des sièges dans un véhicule du type monospace, plusieurs jeux de rails peuvent être placés sur le plancher. La figure 6 montre, à titre d'exemple un véhicule portant, dans l'espace pouvant recevoir deux lignes arrière de sièges 10, huit rails. Quatre de ces rails 12ₐ sont plus courts que les autres et destinés uniquement à recevoir les sièges de la seconde ligne. Ils sont tous utilisés, ainsi que deux rails médians 12_{b}, lorsque trois sièges sont placés de front en seconde ligne. Les deux derniers rails 12_{c} sont utilisés en même temps que les rails 12_{b} pour placer deux sièges complémentaires soit en ligne arrière (où le passage des roues réduit la largeur disponible), soit dans une position intermédiaire quelconque. Pour donner une latitude maximale, tous les rails sont écartés de la même largeur w, exception faite des deux rails médians 12_{b} dont l'écartement est double.

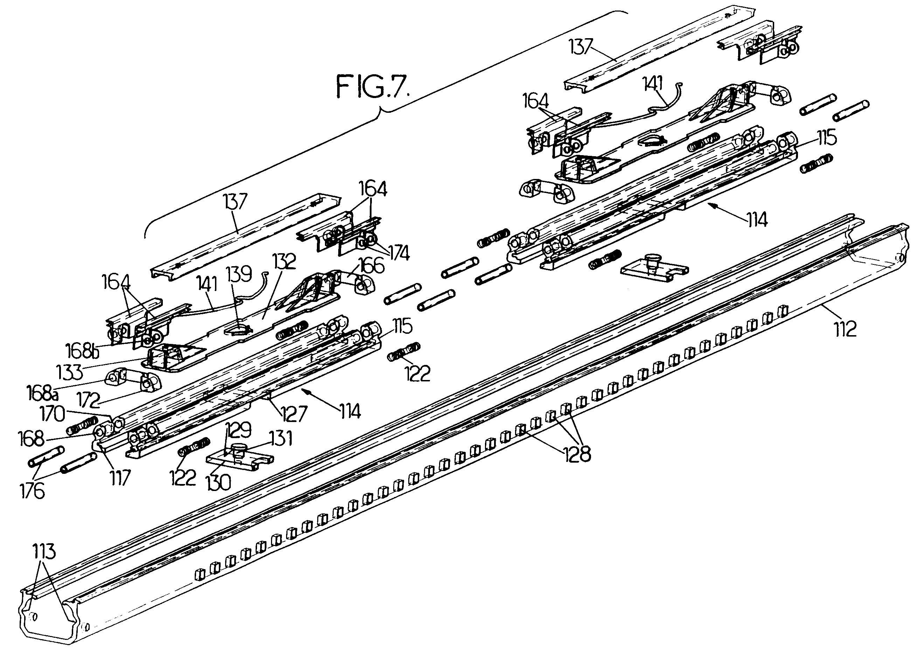

Les figures 7 à 10 illustrent un second mode de réalisation d'un dispositif de réglage selon l'invention. La figure 7 montre un rail associé à deux coulisseaux, pouvant ainsi être installé à la manière des rails 12_{b} et 12_{c} de la figure 6.

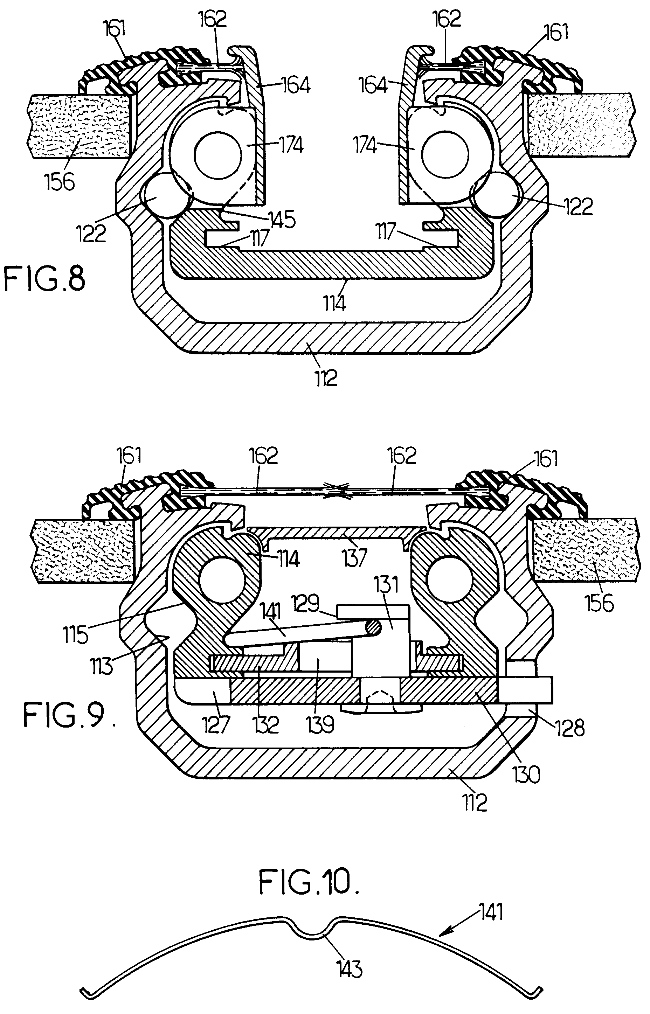

Dans ce second mode de réalisation, le rail 112 et le coulisseau 114 ont tous deux une forme générale en U en section transversale, le coulisseau 114 se trouvant à l'intérieur du rail 112 (figures 8 et 9). Les deux branches de l'U formé par le coulisseau 114 comportent chacune une rainure longitudinale externe en V 115. En regard de ces rainures 115, les branches de l'U formé par le rail 112 présentent chacune une rainure longitudinale interne en V 113, permettant de loger les bâtonnets 122 en matière plastique à faible coefficient de frottement.

Les branches de l'U formées par coulisseau 114 présentent également sur leurs faces intérieures deux rainures longitudinales 117 recevant la platine 132 des moyens de verrouillage. La forme de la platine 132 est illustrée sur la figure 7. A chacune de ses extrémités, elle a une portion en saillie 133 contre laquelle le verrou 20b vient prendre appui lorsque l'utilisateur manoeuvre la manette 48, pour permettre un déplacement de la platine 132 le long du coulisseau 114. Les saillies 133 présentent des trous à leur partie supérieure pour la fixation d'un capot protecteur 137, qui couvre l'espace intérieur du coulisseau 114 sur la longueur de la platine 132. Dans sa partie centrale, la platine 132 comporte un orifice 139 de forme triangulaire.

Le pêne 130 est disposé sous le coulisseau 114, dans une encoche transversale 127 prévue à la base de celui-ci. Le pêne 130 peut coulisser latéralement par rapport au coulisseau 114, et il comporte deux dents d'engagement dans les logements 128 situés sur un côté du rail 112. Le pêne 130 présente également une tige verticale d'accouplement 131 fixée par exemple par rivetage. Un épaulement 129 est prévu à l'extrémité supérieure de la tige 131.

Un ressort-fil 141 est installé entre le flanc du coulisseau 114 opposé aux logements 128 et la tige d'accouplement 131 du pêne. Ce ressort 141 est illustré sur la figure 10. Il a une forme générale en arc de cercle dont les deux extrémités recourbées prennent appui dans une gorge 145 prévue dans le flanc du coulisseau opposé aux logements 128 (figures 8 et 9). Dans sa partie centrale, le ressort 141 présente une échancrure 143 par lequel il prend appui contre l'épaulement 129 de la tige d'accouplement 131, comme le montre la figure 9. Ainsi, le ressort 141 sert à la fois à pousser le pêne 130 vers sa position d'engagement dans les logements 128, et à soutenir verticalement le pêne 130. L'assemblage des moyens de verrouillage sur les coulisseaux 114 est très simple : la platine 132 est d'abord engagée dans les rainures 117 à une extrémité du coulisseau jusqu'à ce que l'orifice 139 se trouve au-dessus de l'encoche 127 ; le pêne 130 est alors placé dans l'encoche 127 de façon que sa tige d'accouplement 131 traverse l'orifice 139 de la platine ; on place alors les extrémités du ressort 141 dans la gorge 145 et on comprime la partie centrale du ressort pour amener l'échancrure 143 contre l'épaulement 129. Le capot 137 peut ensuite être fixé sur les saillies 133.

Le pourtour de l'orifice triangulaire 139 comporte deux côtés formant deux surfaces d'appui de la platine sur la tige d'accouplement 131, qui forment un angle avec la direction du coulisseau 114 et avec la direction de coulissement du pêne 130 relativement aux coulisseaux 114. Ces deux surfaces d'appui sont symétriques par rapport à la direction de coulissement du pêne 130. Ainsi, lorsque le siège est installé sur le coulisseau et que l'utilisateur manoeuvre la manette 48, le verrou secondaire 20b prend appui sur l'une des saillies 133 pour déplacer la platine, et la surface d'appui de l'orifice 139 située du côté de cette saillie 133 éloigne le pêne 130 des logements 128 en comprimant le ressort 141. L'utilisateur peut alors déplacer longitudinalement le siège comme il le souhaite. Quand il relâche la manette 48, le ressort 141 repousse le pêne 130 dans sa position d'engagement dans les logements 128, et ramène la platine 132 dans sa position de repos. Si le siège est installé à 180° par rapport à la position précédente, le fonctionnement est le même, mais en utilisant l'autre saillie 133 et l'autre surface d'appui de l'orifice 139.

Les figures 8 et 9 montrent que le rail 112 est muni, à sa partie supérieure, de deux profilés d'habillage 161 qui s'appliquent sur le revêtement 156 du plancher du véhicule de part et d'autre du rail. Chaque profilé d'habillage 161 supporte une brosse de protection 162 qui s'étend sur sensiblement toute la longueur du rail, entre les deux branches de la forme en U du rail. Les brosses 162 obturent l'intérieur du rail où est installé le coulisseau, afin d'empêcher que des objets puissent perturber le déplacement du coulisseau ou le fonctionnement des moyens de verrouillage. Pour laisser passer les pieds du siège entre les brosses 162, des écarteurs 164 sont fixés aux coulisseaux 114 au voisinage des doigts d'accrochage des pieds 166. Les écarteurs 164 sont les seuls éléments liés aux coulisseaux 114 qui dépassent au-dessus des brosses 162, comme le montre la figure 8.

La figure 7 montre les moyens particulièrement simples qui sont utilisés pour assembler les doigts d'accrochage 166 et les écarteurs 164 sur le coulisseau 114. Les extrémités des branches de la forme en U du coulisseau comportent chacune un alésage longitudinal 168. Aux endroits prévus pour les doigts d'accrochage 166, des encoches transversales 170 sont prévues dans les parties du coulisseau 114 présentant les alésages 168. Ces encoches 170 sont destinées à recevoir des plots 172 solidaires des extrémités du doigt d'accrochage 166, ainsi que des flasques transversaux 174 dirigés vers l'extérieur prévus sur chaque écarteur 164. Chaque plot 172 est traversé par un alésage 168a correspondant à l'un des alésages 168 du coulisseau, et chaque flasque transversal 174 présente une ouverture correspondante 168b. Pour l'assemblage d'un doigt d'accrochage 166, on dispose les deux flasques 174 de chaque écarteur 164 de part et d'autre du plot correspondant 172, on installe l'ensemble dans les encoches 170, et on engage deux goupilles 176 dans les alésages longitudinaux 168, 168a, 168b pour assembler à la fois le doigt 166 et les écarteurs 164 sur le coulisseau.

Comme le montre la figure 8, les plots 172 et/ou les flasques 174 débordent latéralement du coulisseau 114 au niveau des rainures longitudinales 115 recevant les bâtonnets 122 en matière plastique. Ceci procure un moyen particulièrement simple pour caler longitudinalement les bâtonnets 122.

## Revendications

1. Dispositif de réglage de la position longitudinale d'un siège dans un véhicule automobile, comprenant au moins deux rails parallèles (12;112) fixés au plancher du véhicule et deux coulisseaux (14;114) sur lesquels se fixe le siège, les coulisseaux pouvant coulisser le long des rails (12;112) et étant munis de moyens, désarmables à l'aide d'une commande manuelle, de verrouillage des coulisseaux dans l'une quelconque de plusieurs positions longitudinales, lesdits moyens de verrouillage comprenant des logements (28;128) répartis le long d'au moins un des rails, un pêne (30;130) porté par l'un au moins des coulisseaux (14;114) et des moyens de rappel (141) qui sollicitent le pêne vers une position d'engagement dans un ou plusieurs des logements, caractérisé en ce que le coulisseau supporte en outre un organe d'actionnement (32;132) déplaçable parallèlement au coulisseau à l'aide de ladite commande manuelle, qui est portée par le bâti du siège, depuis une position de repos où il laisse le pêne (30;130) libre de s'engager dans un ou plusieurs des logements (28;128) vers une position où il éloigne le pêne des logements contre l'action des moyens de rappel (141).

2. Dispositif selon la revendication 1, caractérisé en ce que le siège porte une tringlerie de commande permettant de déplacer longitudinalement ledit organe d'actionnement (32;132) par rapport au coulisseau.

3. Dispositif selon la revendication 1, caractérisé en ce que chaque coulisseau (14;114) porte à ses extrémités des doigts ou des anneaux (16;166) d'appui de pieds avant et arrière (18) du siège et d'accrochage de verrous (20) désarmables montés sur les pieds.

4. Dispositif selon la revendication 3, caractérisé en ce que l'organe d'actionnement (32;132) prend appui sur le pêne (30;130) par l'une ou l'autre de deux surfaces d'appui formant chacune un angle avec la direction du coulisseau (14;114) et avec la direction de déplacement du pêne (30;130) relativement au coulisseau, ces deux surfaces d'appui étant symétriques l'une de l'autre par rapport à la direction de déplacement du pêne, de sorte que la position longitudinale du siège peut être réglée lorsque le siège est placé sur le coulisseau dans l'une ou l'autre de deux positions à 180° l'une de l'autre.

5. Dispositif selon les revendications 2 et 4, caractérisé en ce que la tringlerie de commande de déplacement longitudinal dudit organe d'actionnement (32;132) inclut l'un des verrous (20b) montés sur les pieds du siège, qui s'applique contre une extrémité dudit organe d'actionnement pour le déplacer le long du coulisseau lorsque ce verrou est désarmé.

6. Dispositif selon l'une quelconque des revendications 1 à 5, caractérisé en ce que le pêne (30) peut coulisser verticalement par rapport au coulisseau (14) et est sollicité vers le bas par les moyens de rappel pour s'engager dans un des logements (28), et en ce que ledit organe d'actionnement est constitué par une platine (32) qui présente au moins une face d'appui inclinée qui soulève le pêne lorsque la platine est déplacée à partir de la position de repos.

7. Dispositif selon les revendications 4 et 6, caractérisé en ce que la platine comporte deux faces d'appui inclinées constituant les flancs d'une encoche en V.

8. Dispositif selon l'une quelconque des revendications 1 à 5, caractérisé en ce que les logements (128) sont situés sur un côté du rail (112), en ce que le pêne (130) peut coulisser latéralement par rapport au coulisseau (114) et présente une tige verticale d'accouplement (131), et en ce que ledit organe d'actionnement est constitué par une platine (132) qui présente un orifice (139) dont le pourtour comprend au moins une surface d'appui sur la tige d'accouplement, formant un angle avec la direction du coulisseau (114) et avec la direction de coulissement du pêne (130), pour éloigner le pêne des logements (128) lorsque la platine (132) est déplacée à partir de la position de repos.

9. Dispositif selon les revendications 4 et 8, caractérisé en ce que le pourtour de l'orifice (139) de la platine comporte deux surfaces d'appui symétriques par rapport à la direction de coulissement du pêne.

10. Dispositif selon la revendication 8 ou 9, caractérisé en ce que les moyens de rappel sont constitués par un ressort (141) installé entre un flanc du coulisseau (114) opposé aux logements (128) et la tige d'accouplement (131) du pêne.

11. Dispositif selon la revendication 10, caractérisé en ce que le pêne (130) est disposé sous le coulisseau (114) et est soutenu par le ressort (141) qui prend appui contre un épaulement (129) prévu sur la tige d'accouplement (131).

12. Dispositif selon la revendication 3, caractérisé en ce que le rail (112) a une section de forme générale en U, deux brosses de protection (162) étant prévues à la partie supérieure du rail, entre les branches de l'U, pour obturer l'intérieur du rail où est installé le coulisseau (114), et en ce que chaque coulisseau comporte, autour des doigts ou anneaux d'appui des pieds (166), des écarteurs (164) pour laisser passer les pieds entre les brosses (162) lorsque le siège est déplacé longitudinalement.

13. Dispositif selon la revendication 12, caractérisé en ce que le coulisseau a une forme générale en U, les extrémités des branches de l'U comportant chacune un alésage longitudinal (168), en ce que chaque doigt d'appui de pied (166) est solidaire à ses deux extrémités de plots respectifs (172) traversés chacun par un alésage (168a) correspondant à l'un des alésages longitudinaux du coulisseau, en ce qu'un écarteur (164) comporte deux flasques transversaux (174) dirigés vers l'extérieur, disposés de part et d'autre d'un des plots et présentant chacun une ouverture (168b) correspondant aux alésages du coulisseau et du plot, et en ce que deux goupilles (176) sont engagées respectivement dans les deux alésages longitudinaux du coulisseau pour assembler à la fois le doigt et les écarteurs sur le coulisseau.

14. Dispositif selon l'une quelconque des revendications précédentes, caractérisé en ce que chaque coulisseau (14;114) repose sur le rail respectif (12;112) par l'intermédiaire de bâtonnets en matière plastique (22;122) emprisonnés chacun dans deux rainures longitudinales (113,115) en regard du coulisseau et du rail.

15. Dispositif selon les revendications 13 et 14, caractérisé en ce que les plots (172) solidaires des doigts d'appui des pieds et/ou les flasques (174) des écarteurs débordent latéralement du coulisseau au niveau des rainures longitudinales (115), pour caler longitudinalement les bâtonnets (122) en matière plastique.

16. Dispositif selon l'une quelconque des revendications précédentes, caractérisé en ce que plusieurs couples de rails sont fixés au plancher du véhicule, à distance égale de façon à permettre de placer un siège sur l'un quelconque de plusieurs couples de rails.

17. Siège enlevable de véhicule automobile destiné à être utilisé avec un dispositif suivant l'une quelconque des revendications 3, 4, 5, 7 et 9 comprenant des pieds d'appui avant et arrière dans lesquels sont pratiquées des échancrures d'engagement dans les anneaux (16), caractérisé en ce que chacun des pieds avant (18) au moins est muni d'un verrou primaire et d'un verrou secondaire pouvant basculer l'un et l'autre autour d'un axe sur le pied respectif, les verrous secondaires (20_{b}) pouvant être désarmés indépendamment des verrous primaires (20ₐ) à l'aide d'un palonnier (46) porté par les sièges et étant placés de façon que leur déverrouillage écarte lesdits organes d'actionnement de leur position de repos.

## Claims

1. A device for adjusting the longitudinal position of a seat in a motor vehicle, comprising at least two parallel rails (12;112) attached to the floor of the vehicle and two slides (14;114), to which the seat is attached, the slides being slidable along the rails (12;112) and having means, disengagable via a manual control, for locking the slides in any of a number of longitudinal positions, said locking means comprising recesses (28;128) spaced along at least one of the rails; a bolt (30;130) borne by at least one of the slides (14;114); and return means (141) which urge the bolt towards a position of engagement in one or more of the recesses, characterised in that the slide also supports an actuating member (32;132) displaceable parallel with the slide by means of said manual control, which is borne by the frame of the seat, from an inoperative position, in which it leaves the bolt (30;130) free to engage in one or more of the recesses (28;128), to a position in which it moves the bolt away from the recesses against the force of the return means (141).

2. A device according to Claim 1 characterised in that the seat bears a control linkage enabling said actuating member (32;132) to be displaced longitudinally in relation to the slide.

3. A device according to Claim 1 characterised in that each slide (14;114) bears at its ends fingers or rings (16;116) for the support of front and rear supports (18) of the seat and the attachment of disengagable latches (20) mounted on said supports.

4. A device according to Claim 3 characterised in that the actuating member (32;132) bears against the bolt (30:130) via one or other of two bearing surfaces each forming an angle with the direction of the slide (14;114) and with the direction of displacement of the bolt (30;130) in relation to the slide; said two bearing surfaces being symmetrical with one another in relation to the direction of displacement of the bolt, so that the longitudinal position of the seat can be adjusted when the seat is placed on the slide in one or other of two positions 180° away from one another.

5. A device according to Claims 2 and 4 characterised in that the linkage controlling the longitudinal displacement of said actuating member (32;132) includes one of the latches (20b) mounted on the supports of the seat, which is applied against one end of said actuating member for its displacement along the slide when said latch is disengaged.

6. A device according to any of Claims 1 to 5 characterised in that the bolt (30) can slide vertically in relation to the slide (14) and is urged downwardly by the return means to become engaged in one of the recesses (28), and said actuating member is formed by a plate (32) having at least inclined bearing face which lifts the bolt when said plate is displaced from its inoperative position.

7. A device according to Claims 4 and 6 characterised in that the plate comprises two inclined bearing faces forming the flanks of a V-shaped notch.

8. A device according to any of Claims 1 to 5 characterised in that the recesses (128) are located on one side of the rail (112); the bolt (130) can slide laterally in relation to the slide (114) and has a vertical coupling rod (131); and said actuating member is formed by a plate (132) having an aperture (139) whose periphery comprises at one surface which bears against the coupling rod and forms an angle with the direction of the slide (114) and with the sliding direction of the bolt (130), to move the bolt away from the recesses (128) when the plate (132) is displaced from the inoperative position.

9. A device according to Claims 4 and 8 characterised in that the periphery of the aperture (139) of the plate comprises two bearing surfaces which are symmetrical in relation to the direction of sliding of the bolt.

10. A device according to Claims 8 or 9 characterised in that the return means are formed by a spring (141) installed between a flank of the slide (114) opposite from the recesses (128) and the coupling rode (131) of the bolt.

11. A device according to Claim 10 characterised in that the bolt (130) is disposed beneath the slide (114) and is supported by the spring (141) which bears against a shoulder (129) with which the coupling rod (131) is formed.

12. A device according to Claim 3 characterised in that the rail (112) has a generally U-shaped section, two protective brushes (162) being provided in the upper portion of the rail between the arms of the U to close the inside of the rail in which the slide (114) is installed, each slide comprising, around the fingers or rings supporting the supports (166), spreaders (164) to allow the supports to pass between the brushes (162) when the seat is displaced longitudinally.

13. A device according to Claim 12 characterised in that the slide is generally U-shaped, the ends of the branches of the U each comprises a longitudinal bore (168); each finger supporting the support (166) is connected at its two ends to respective studs (172) each formed with a bore (168a) corresponding to one of the longitudinal bores of the slide; one spreader (164) comprises two outwardly directed transverse flanges (174) disposed on each side of one of the studs and each formed with an opening (168b) corresponding to the bores of the slide and the stud; and two pins (176) are engaged respectively in the two longitudinal bores of the slide for the simultaneous assembly of the finger and the spreaders on the slide.

14. A device according to any of the preceding Claims characterised in that each slide (14;114) rests on the respective rail (12;112) via small plastic rods (22;122) each trapped in two longitudinal grooves (113,115) opposite the slide and rail.

15. A device according to Claims 13 and 14 characterised in that the studs (172) connected to the fingers supporting the support and/or the flanges (174) of the spreaders project laterally of the slide at the longitudinal grooves (115), to wedge the small plastic rods (122) longitudinally.

16. A device according to any of the preceding Claims characterised in that another pairs of rails are attached evenly spaced-out to the floor of the vehicle, so as to enable a seat to be placed on any of said several pairs of rails.

17. A removable motor vehicle seat adapted to be used with a device according to any of Claims 3, 4, 5, 7 and 9 comprising front and rear supports formed with notches for engagement in the rings (16) characterised in that each of the front supports (18) at least as a primary latch and a secondary latch both able to tilt around an axis on the respective support, the secondary latches (20_{b}) being disengagable independently of the primary latches (20ₐ) by means of a rocking lever (46) borne by the seats and being so placed that their unlocking moves said actuating members away from their inoperative position.

## Patentansprüche

1. Vorrichtung zur Einstellung der Längsposition eines Sitzes in einem Kraftfahrzeug mit wenigstens zwei am Boden des Fahrzeuges befestigten parallelen Schienen (12,112) und zwei Kulissen (14,114), auf denen der Sitz befestigt ist, wobei die Kulissen entlang der Schienen (12,112) gleiten können, und mit Mitteln zur Verriegelung der Kulissen in irgendeiner der mehreren Längspositionen, wobei die Mittel mittels einer manuellen Steuerung entriegelbar sind und Ausnehmungen (28,128), die entlang wenigstens einer der Schienen verteilt sind, einen Riegel (30,130), der von wenigstens einer der Kulissen (14,114) getragen ist, und Rückstellmittel (141) aufweisen, die den Riegel in eine Eingriffsposition in einer oder mehrerer der Ausnehmungen halten,
dadurch gekennzeichnet,
daß die Kulisse außerdem ein Betätigungselement (32,132) trägt, welches parallel zur Kulisse mittels der manuellen Steuerung, welche vom Sitzgestell getragen ist, aus einer Ruheposition verschiebbar ist, wo es den Riegel (30,130) freiläßt, um in eine oder mehrere der Ausnehmungen (28,120) in eine Position einzugreifen, wo es den Riegel aus den Ausnehmungen gegen die Kraft der Rückstellmittel (141) entfernt.

2. Vorrichtung nach Anspruch 1,
dadurch gekennzeichnet,
daß der Sitz ein Steuergestänge trägt, welches es erlaubt, das Betätigungselement (32,132) im Verhältnis zur Kulisse in Längsrichtung zu verschieben.

3. Vorrichtung nach Anspruch 1,
dadurch gekennzeichnet,
daß jede Kulisse (14,114) an ihren Enden Zapfen oder Ringe (16,166) zur Abstützung an den Vorder- und den Hinterfüßen (18) des Sitzes und zum Anhängen von Riegeln (20) trägt, die entfernbar an den Füßen befestigt sind.

4. Vorrichtung nach Anspruch 3,
dadurch gekennzeichnet,
daß das Betätigungselement (32,132) sich auf dem Riegel (30,130) durch die eine oder die andere der beiden Stützoberflächen abstützt, die jeweils einen Winkel mit der Richtung der Kulisse (14,114) und der Verschieberichtung des Riegels (30,130) relativ zur Kulisse bildet, wobei die beiden Stützoberflächen gegenseitig symmetrisch im Verhältnis zur Verschieberichtung des Riegels angeordnet sind, derart, daß die Längsposition des Sitzes geregelt werden kann, wenn der Sitz auf der Kulisse in der ein oder der anderen der beiden Positionen mit 180° gegenüber der einen der anderen angeordnet ist.

5. Vorrichtung nach den Ansprüchen 2 und 4,
dadurch gekennzeichnet,
daß das Steuergestänge zur Längsverschiebung des Betätigungselementes (32,132) einen der auf den Füßen des Sitzes befestigten Riegel (20b) einschließt, der gegen ein Ende des Betätigungselementes einwirkt, um dieses entlang der Kulisse zu verschieben, wenn dieser Riegel entriegelt ist.

6. Vorrichtung nach irgendeinem der Ansprüche 1 bis 5,
dadurch gekennzeichnet,
daß der Riegel (30) vertikal im Verhältnis zur Kulisse (14) gleiten kann und nach unten durch die Rückstellmittel zum Eingreifen in eine der Ausnehmungen (28) gedrückt wird, und daß das Betätigungselement von einer Scheibe (22) gebildet ist, welche wenigstens eine geneigte Stützfläche aufweist, die den Riegel anhebt, wenn die Scheibe aus ihrer Ruheposition verschoben wird.

7. Vorrichtung nach den Ansprüchen 4 und 6,
dadurch gekennzeichnet,
daß die Scheibe zwei geneigte Stützflächen aufweist, die die Flanken einer V-förmigen Kerbe bilden.

8. Vorrichtung nach irgendeinem der Ansprüche 1 bis 5,
dadurch gekennzeichnet,
daß die Ausnehmungen (128) an einer Seite der Schiene (112) angeordnet sind, daß der Riegel (130) seitlich im Verhältnis zur Kulisse (140) verschiebbar ist und einen vertikalen Kupplungsschaft (131) aufweist, und daß das Betätigungselement von einer Scheibe (132) gebildet ist, welche eine Öffnung (139) aufweist, deren Umfang wenigstens eine Stützoberfläche auf dem Kupplungsschaft aufweist und einen Winkel mit der Richtung der Kulisse (114) und mit der Richtung der Verschiebung des Riegels (130) bildet, um den Riegel aus den Ausnehmungen (128) zu entfernen, wenn die Scheibe (132) aus ihrer Ruheposition verschoben wird.

9. Vorrichtung nach den Ansprüchen 4 und 8,
dadurch gekennzeichnet,
daß der Umfang der Öffnung (139) der Scheibe zwei Stützoberflächen aufweist, die im Verhältnis zur Richtung der Verschiebung des Riegels symmetrisch sind.

10. Vorrichtung nach Anspruch 8 oder 9,
dadurch gekennzeichnet,
daß die Rückstellmittel von einer Feder (141) gebildet sind, die zwischen einer Seite der Kulisse (114) gegenüberliegend zu den Ausnehmungen (128) und dem Kupplungsschaft (131) des Riegels installiert ist.

11. Vorrichtung nach Anspruch 10,
dadurch gekennzeichnet,
daß der Riegel (130) unter der Kulisse (114) angeordnet ist und von der Feder (141) gestützt ist, die sich gegen einen an dem Kupplungsschaft (131) vorgesehenen Arm (12) abstützt.

12. Vorrichtung nach Anspruch 3,
dadurch gekennzeichnet,
daß die Schiene (112) im allgemeinen einen U-förmigen Querschnitt aufweist, wobei im Bereich oberhalb der Schiene zwischen den beiden U-Schenkeln zwei Schutzbürsten (162) vorgesehen sind, um das Innere der Schiene abzudichten, wo die Kulisse (114) angeordnet ist, und daß jede Kulisse um die Zapfen oder Ringe zur Abstützung der Füße (166) herum Spreizelemente aufweist, um die Füße zwischen den Bürsten (162) hindurchtreten zu lassen, wenn der Sitz in Längsrichtung verschoben wird.

13. Vorrichtung nach Anspruch 12,
dadurch gekennzeichnet,
daß die Kulisse (112) im allgemeinen einen U-förmigen Querschnitt aufweist, wobei die Enden der Schenkel des U jeweils eine Längsbohrung (168) aufweisen, daß jeder Stützzapfen des Fußes (166) an seinen beiden Enden jeweils mit Buchsen (172) fest verbunden ist, die jeweils von einer Bohrung (168a) durchdrungen sind, welche einer der Längsbohrungen der Kulisse entspricht, daß ein Spreizelement (164) zwei transversale, nach außen gerichtete Flanken (174) aufweist, die einerseits und andererseits einer der Buchsen angeordnet sind und jeweils eine Öffnung (168b) aufweisen, die mit den Bohrungen der Kulisse und der Buchse übereinstimmen, und daß zwei Stifte (176) jeweils in die beiden Längsbohrungen der Kulisse eingreifen, um zugleich die Zapfen und die Spreizelemente auf der Kulisse zu verbinden.

14. Vorrichtung nach irgendeinem der vorangehenden Ansprüche,
dadurch gekennzeichnet,
daß jede Kulisse (14,114) auf der jeweiligen Schiene (12,112) durch Zwischenschaltung von Stäbchen (22,122) aus Kunststoff aufliegt, die jeweils in den beiden Längsnuten (113,115) im Hinblick auf die Kulisse und die Schiene eingeschlossen sind.

15. Vorrichtung nach den Ansprüchen 13 und 14,
dadurch gekennzeichnet,
daß die Buchsen (172), die fest mit den Stützzapfen der Füße und/oder den Flanken (174) der Spreizelemente verbunden sind, seitlich die Kulisse im Bereich der Längsnuten (115) überragen, um die Stäbchen (122) aus Kunststoff in Längsrichtung zu verkeilen.

16. Vorrichtung nach irgendeinem der vorangehenden Ansprüche,
dadurch gekennzeichnet,
daß mehrere Paare von Schienen am Boden des Fahrzeugs in einem gleichen Abstand befestigt sind, um einen Sitz auf irgendeiner der mehreren Paare von Schienen anordnen zu können.

17. Entfernbarer Sitz für Kraftfahrzeuge zur Verwendung mit einer Vorrichtung nach irgendeinem der Ansprüche 3, 4, 5, 7 und 9, mit vorderen und hinteren Stützfüßen, in denen Einbuchtungen zum Eingreifen in die Ringe (16) angebracht sind,
dadurch gekennzeichnet,
daß jeder der vorderen Füße (18) wenigstens mit einem ersten Riegel und einem zweiten Riegel versehen ist, welche gegeneinander um eine Achse auf dem jeweiligen Fuß kippen können, wobei die zweiten Riegel (20_{b}) unabhängig von den ersten Riegeln (20ₐ) mit Hilfe eines Hebels (46) entriegelbar sind, der von dem Sitz getragen ist und derart angeordnet ist, daß seine Entriegelung die Betätigungselemente aus ihrer Ruheposition entfernt.
